# EUROPEAN PATENT APPLICATION

(11) **EP 4 489 512 A1**
(43) Date of publication of application: **08.01.2025**
(21) Application number: 23775358.7
(22) Date of filing: 24.03.2023
(51) Int. Cl.: H04W 76/40, H04W 4/06, H04W 48/18, H04W 8/02, G06F 9/455

(54) **COMMUNICATION METHOD AND DEVICE IN WIRELESS COMMUNICATION SYSTEM SUPPORTING VIRTUAL NETWORK GROUP COMMUNICATION**

(30) Priority: 25.03.2022 KR 20220037345
(71) Applicant: Samsung Electronics Co., Ltd., Suwon-si, Gyeonggi-do 16677 (KR)
(72) Inventor: MOON, Sangjun, Suwon-si, Gyeonggi-do 16677 (KR)
(74) Representative: HGF
(86) International application number: PCT/KR2023/003969
(87) International publication number: WO 2023/182863

(57) **Abstract**

The present disclosure relates to a communication method and device enabling information sharing between multiple SMFs in a wireless communication system for supporting virtual network (VN) group communication. A method performed by a first SMF for managing a session of a terminal in a wireless communication system for supporting VN group communication according to an embodiment of the present disclosure comprises the steps of: receiving, through an AMF that manages the mobility of the terminal, a PDU session establishment request message having been transmitted from the terminal and including identification information indicating the VN group communication; transmitting a request message including the identification information to a UDM that manages subscription information; receiving information about multiple SMFs enabling information sharing for the VN group communication from the UDM; and performing session management for the VN group communication through the information sharing with a second SMF among the multiple SMFs.

## Description

### [Technical Field]

The disclosure relates to a method and device for supporting group communication in a wireless communication system.

### [Background Art]

5G mobile communication technology defines a wide frequency band to enable fast transmission speed and new services and may be implemented in frequencies below 6GHz ('sub 6GHz'), such as 3.5 GHz, as well as in ultra-high frequency bands ('above 6GHz'), such as 28GHz and 39GHz called millimeter wave (mmWave). Further, 6G mobile communication technology, which is called a beyond 5G system, is considered to be implemented in terahertz bands (e.g., 95GHz to 3 THz) to achieve a transmission speed 50 times faster than 5G mobile communication technology and ultra-low latency reduced by 1/10.

In the early stage of 5G mobile communication technology, standardization was conducted on beamforming and massive MIMO for mitigating propagation pathloss and increasing propagation distance in ultrahigh frequency bands, support for various numerologies for efficient use of ultrahigh frequency resources (e.g., operation of multiple subcarrier gaps), dynamic operation of slot format, initial access technology for supporting multi-beam transmission and broadband, definition and operation of bandwidth part (BWP), new channel coding, such as low density parity check (LDPC) code for massive data transmission and polar code for high-reliable transmission of control information, L2 pre-processing, and network slicing for providing a dedicated network specified for a specific service, so as to meet performance requirements and support services for enhanced mobile broadband (eMBB), ultra-reliable low-latency communications (URLLC), and massive machine-type communications (mMTC).

Currently, improvement and performance enhancement in the initial 5G mobile communication technology is being discussed considering the services that 5G mobile communication technology has intended to support, and physical layer standardization is underway for technology, such as vehicle-to-everything (V2X) for increasing user convenience and assisting autonomous vehicles in driving decisions based on the position and state information transmitted from the VoNR, new radio unlicensed (NR-U) aiming at the system operation matching various regulatory requirements, NR UE power saving, non-terrestrial network (NTN) which is direct communication between UE and satellite to secure coverage in areas where communications with a terrestrial network is impossible, and positioning technology.

Also being standardized are radio interface architecture/protocols for technology of industrial Internet of things (IIoT) for supporting new services through association and fusion with other industries, integrated access and backhaul (IAB) for providing nodes for extending the network service area by supporting an access link with the radio backhaul link, mobility enhancement including conditional handover and dual active protocol stack (DAPS) handover, 2-step RACH for NR to simplify the random access process, as well as system architecture/service fields for 5G baseline architecture (e.g., service based architecture or service based interface) for combining network functions virtualization (NFV) and software-defined networking (SDN) technology and mobile edge computing (MEC) for receiving services based on the position of the UE.

As 5G mobile communication systems are commercialized, soaring connected devices would be connected to communication networks so that reinforcement of the function and performance of the 5G mobile communication system and integrated operation of connected devices are expected to be needed. To that end, new research is to be conducted on, e.g., extended reality (XR) for efficiently supporting, e.g., augmented reality (AR), virtual reality (VR), and mixed reality (MR), and 5G performance enhancement and complexity reduction using artificial intelligence (AI) and machine learning (ML), support for AI services, support for metaverse services, and drone communications.

Further, development of such 5G mobile communication systems may be a basis for multi-antenna transmission technology, such as new waveform for ensuring coverage in 6G mobile communication terahertz bands, full dimensional MIMO (FD-MIMO), array antenna, and large scale antenna, full duplex technology for enhancing the system network and frequency efficiency of 6G mobile communication technology as well as reconfigurable intelligent surface (RIS), high-dimensional space multiplexing using orbital angular momentum (OAM), metamaterial-based lens and antennas to enhance the coverage of terahertz band signals, AI-based communication technology for realizing system optimization by embedding end-to-end AI supporting function and using satellite and artificial intelligence (AI) from the step of design, and next-generation distributed computing technology for implementing services with complexity beyond the limit of the UE operation capability by way of ultrahigh performance communication and computing resources.

### [Detailed Description of the Invention]

### [Technical Problem]

The disclosure provides a communication method and device capable of sharing information between a plurality of SMFs in a wireless communication system supporting virtual network (VN) group communication.

The disclosure provides a communication method and device capable of sharing information between a plurality of SMFs having different service areas or TAs in a wireless communication system supporting VN group communication.

### [Technical Solution]

According to an embodiment of the disclosure, a method performed by a first session management function (SMF) managing a session of a user equipment (UE) in a wireless communication system supporting virtual network (VN) group communication comprises receiving a protocol data unit (PDU) session establish request message including identification information indicating the VN group communication, transmitted from the UE through an access and mobility management function (AMF) managing mobility of the UE, transmitting a request message including the identification information to a user data management (UDM) managing subscription information, receiving information about a plurality of SMFs capable of information sharing for the VN group communication from the UDM, and performing session management for the VN group communication through the information sharing with a second SMF among the plurality of SMFs.

Further, according to an embodiment of the disclosure, a first SMF managing a session of a UE in a wireless communication system supporting VN group communication comprises a transceiver and a processor configured to receive, through the transceiver, a PDU session establish request message including identification information indicating the VN group communication, transmitted from the UE through an AMF for managing mobility of the UE, transmit, through the transceiver, a request message including the identification information to a UDM managing subscription information, receive, through the transceiver, information about a plurality of SMFs capable of information sharing for the VN group communication from the UDM, and perform session management for the VN group communication through the information sharing with a second SMF among the plurality of SMFs.

Further, according to an embodiment of the disclosure, a UDM managing subscription information about a UE in a wireless communication system supporting VN group communication comprises a transceiver and a processor configured to receive, through the transceiver, a subscription request message including identification information indicating the VN group communication, from a first SMF, managing a session of the UE, receiving a PDU session establish request message including the identification information, and in response to the subscription request message, transmit, through the transceiver, a subscription response message including information about a plurality of SMFs capable of information sharing for the VN group communication to the first SMF.

### [Brief Description of the Drawings]

FIG. 1 is a view illustrating an example configuration of a wireless communication system to which VN group management is applied according to an embodiment of the disclosure;
FIG. 2 is a view illustrating an example of a VN group communication method performed in a wireless communication system;
FIG. 3 is a view illustrating issues that may arise in VN group communication when a plurality of SMFs are used in a wireless communication system;
FIG. 4 is a view illustrating a VN group communication method when a plurality of SMFs are used in a wireless communication system according to an embodiment of the disclosure;
FIG. 5 is a flowchart illustrating a method for establishing a PDU session in a wireless communication system supporting VN group communication according to an embodiment of the disclosure;
FIG. 6 is a flowchart illustrating a method for releasing a PDU session in a wireless communication system supporting VN group communication according to an embodiment of the disclosure;
FIGS. 7A and 7B are flowcharts illustrating a method for changing a UPF in a wireless communication system supporting VN group communication according to an embodiment of the disclosure;
FIG. 8 is a flowchart illustrating operations of an SMF in a wireless communication system supporting VN group communication according to an embodiment of the disclosure; and
FIG. 9 is a view illustrating an example configuration of a network entity according to an embodiment of the disclosure.

### [Mode for Carrying out the Invention]

Hereinafter, the operational principle of the disclosure is described below with reference to the accompanying drawings. When determined to make the subject matter of the present invention unclear, the detailed description of known functions or configurations may be skipped. The terms as used herein are defined considering the functions in the present disclosure and may be replaced with other terms according to the intention or practice of the user or operator. Therefore, the terms should be defined based on the overall disclosure.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

As used herein, terms for identifying access nodes, terms denoting network entities, terms denoting messages, terms denoting inter-network entity interfaces, and terms denoting various pieces of identification information are provided as an example for ease of description. Thus, the disclosure is not limited by the terms, and such terms may be replaced with other terms denoting objects with equivalent technical concept.

For ease of description, the terms and names defined in the latest 3rd generation partnership project 5G and NR standards among the current communication standards are used herein. However, the disclosure is not limited by such terms and names and may be likewise applicable to wireless communication systems conforming to other standards. In particular, the disclosure may be applied to 3GPP GS/NR (5th generation mobile communication standards).

According to the disclosure, the base station may be an entity allocating a resource to the user equipment (UE) and may be at least one of a gNode B, gNB, eNode B, eNB, Node B, BS, radio access network (RAN), base station controller, or node on network. The base station may be at least one network entity among an integrated access and backhaul-donor (IAB-donor), which is a gNB providing network access to UE(s) through a network of backhaul and access links in the NR system (hereinafter, 5G system), and an IAB-node, which is a radio access network (RAN) node supporting backhaul link(s) to the IAB-donor or another IAB-node and supporting NR access link(s) to UE(s). In the disclosure, the UE may be various wireless communication devices, as well as mobile phones, mobile stations (MSs), cellular phones, smartphones, computers, NB-IoT devices, and sensors.

In the 5G system, network slices are supported, and traffic for different network slices may be processed by different protocol data unit (PDU) sessions. The PDU session may mean an association between a data network providing a PDU connection service and a UE. The network slice may be understood as technology for logically configuring a network with a set of network functions (NF) to support various services with different characteristics, such as broadband communication services, massive IoT, V2X, or other mission critical services, and separating different network slices. Therefore, even when a communication failure occurs in one network slice, communication in other network slices is not affected, so that it is possible to provide a stable communication service. In the disclosure, the term "slice" may be interchangeably used interchangeably with "network slice". In such a network environment, the UE may access a plurality of network slices when receiving various services. Further, the network function (NF) may be a software instance running on hardware and be implemented as a virtualized function instantiated on a network element or an appropriate platform.

The mobile communication carrier may constitute the network slice and may allocate network resources suitable for a specific service for each network slice or for each set of network slices. A network resource may mean a network function (NF) or logical resource provided by the NF or radio resource allocation of a base station.

For example, a mobile communication carrier may configure network slice A for providing a mobile broadband service, network slice B for providing a vehicle communication service, and network slice C for providing a broadcast service. In other words, the 5G network may efficiently provide a corresponding service to a UE through a specialized network slice suited for the characteristics of each service. In the 5G system, the network slice may be represented as single-network slice selection assistance information (S-NSSAI).

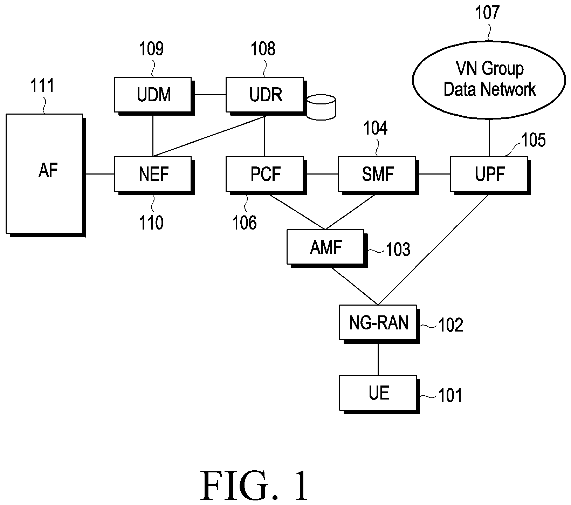

In the disclosure, the network technology may refer to the standards (e.g., TS 23.501, TS 23.502, TS 23.503, etc.) defined by the international telecommunication union (ITU) or 3GPP, and each of the components included in the network architecture of FIG. 1 may mean a physical entity or may mean software that performs an individual function or hardware combined with software. Reference characters denoted by Nx in the drawings, such as N1, N2, N3,..., etc., indicate known interfaces between NFs in the 5G core network (CN), and the relevant descriptions may be found in the standard specifications (TS 23.501). Therefore, a detailed description will be omitted.

FIG. 1 is a view illustrating an example configuration of a wireless communication system to which virtual network (VN) group management is applied according to an embodiment of the disclosure.

The 5G system may include a 5G radio access network (NG-RAN) 101 and a 5G core network (5GC). The NG-RAN (hereinafter, RAN) 102 may be a base station (e.g., gNB or integrated access and backhaul (IAB)) supporting radio access technology in the 5G system, for radio access of the UE 101.

Referring to FIG. 1, the 5GC may include network functions (NFs), such as an access and mobility management function (AMF) 103, a session management function (SMF) 104, a user plane function (UPF) 105, a policy control function (PCF) 106, a unified data repository (UDR) 108, a user data management (UDM) 109, and a network exposure function (NEF) 110.

The AMF 103 is an entity for managing access and mobility of the UE 101. As an example, the AMF 103 may perform such functions as registration of the UE 101, connection, reachability, mobility management, access identification/authentication, and mobility event generation. The SMF 104 may perform a management function for a protocol data unit (PDU) session of the UE 101. For example, the SMF 104 may perform such network functions as session management functions of establishing, modifying, or releasing a session and maintaining a tunnel between the UPF 105 and the RAN 102 necessary therefor, the functions of allocating and managing an Internet protocol (IP) address of the UE 101, selection and control of the user plane, control of traffic processing on the UPF 105, and billing data gathering control. The UPF 105 may serve to process data of the UE 101 and may play a role to transfer the data transmitted from the UE 101 to an external network or process the data to allow the data introduced from the external network to be transferred to the UE 101. The UPF 105 may perform network functions, such as acting as an anchor between radio access technologies (RATs), providing connection with PDU sessions and the application function (AF) 111, packet routing and forwarding, packet inspection, application of user plane policy, creating a traffic usage report, or buffering.

The UDM 109 performs functions, such as generating authentication information for 3GPP security, processing the user ID, managing a list of network functions (NFs) supporting the UE 101, and managing subscription information. The UDR 108 may perform the functions of storing and providing subscriber information managed by the UDM 109, structured data for exposure, and application data related to NEF 110 or service. The UDR 108 may store subscription information for the UE 101 and may provide the UDM 109 with the stored subscription information. Further, the UDR 108 may store operator policy information and may provide operator policy information to the PCF 105. The PCF 105 manages operator policy information for providing a service in the 5G system. The NEF 110 may be responsible for transmitting or receiving an event occurring in the 5G system and a supported capability to/from the outside. For example, the NEF 110 may perform functions, such as safe supply of information about of the AF 111 to the 5GC, conversion of internal/external information, and storing in the UDR 108 and then (re)distributing the information received from other NFs.

An example of a 5G VN group management method that may be performed in the system of FIG. 1 is described. The AF 111 may configure a virtual network (VN) group in the UDR 108 through the NEF 110. In this way, a VN group may be created/modified/deleted in the 5G system, a member for each VN group may be added/deleted, and the attributes for each VN group may be set.

VN group communication performed in the 5G system is described. The SMF 104 may configure the UPF 105 to apply different traffic transfer methods to route traffic between PDU sessions for a single VN group. For example, in the 5G system, some packet flows may be delivered locally according to a destination address, while other packet flows may be delivered through interface N19, and still other packet flows may be delivered to interface N6. If UPF local switching, N6-based forwarding, and N19-based forwarding are used, the SMF 104 may control a PDU session anchor (PSA) UPF that performs an anchor function for the VN group. VN group communication includes one-to-one communication and one-to-many communication. One-to-one communication supports traffic transfer between two UEs in the VN. One-to-many communication supports transfer of multicast traffic or broadcast traffic from one UE to multiple UEs in the VN. In the case of UEs belonging to the same VN group and having the same PDU session of the PSA UPF, traffic may be transferred from one UE to another UE using local switching.

As such, in order to support VN group communication in the 5G system, the PSA UPF connected to each UE may be controlled to exchange data with another UE and/or a data network (DN). In this case, since there may be a plurality of PSA UPFs participating in the VN group communication, an interface (e.g., N19) for transferring data may be required between the plurality of PSA UPFs, and information for transferring data through the interface may be configured in the corresponding PSA UPFs. In order to control PSA UPFs in VN group communication, one SMF may configure forwarding information between UEs for group communication. However, when a plurality of SMFs share control of PSA UPFs, such as when a service area is limited for each SMF or when an SMF is allocated for each TA, information known to each SMF is limited, and PSA UPFs that may be controlled by each SMF are also limited. Accordingly, there is a need for a method for stably managing forwarding information between UEs in VN group communication in which a plurality of SMFs are involved.

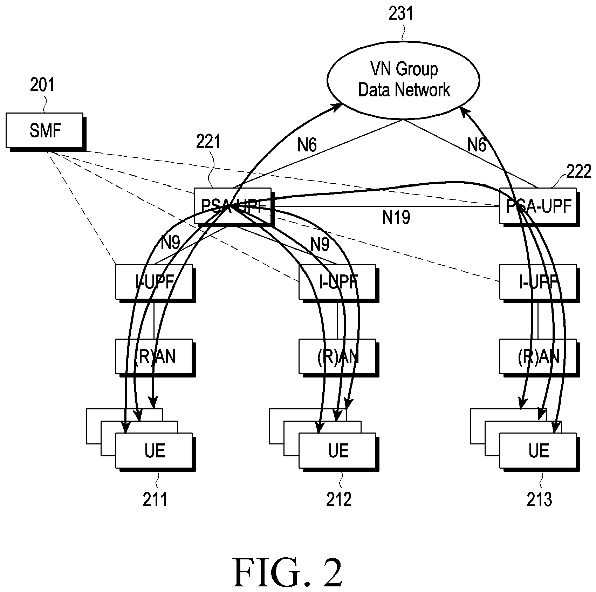

FIG. 2 is a view illustrating an example of a VN group communication method performed in a wireless communication system.

Referring to FIG. 2, a system of FIG. 2 includes UEs 211, 212, and 213, RANs for radio access of the UEs 211, 212, and 213, an intermediate-UPF (I-UPF) which is a UPF performing a relay function, PSA UPFs 221 and 222 which are UPFs performing an anchor function, and a data network 231 for VN group communication. For the basic operation of each NF in the system of FIG. 2, the description of the corresponding NF in FIG. 1 may be referred to, and thus a detailed description thereof is omitted.

In the system of FIG. 2, e.g., if the UE 211 that has established a PDU session using a data network name (DNN) for each group transmits data to another UE 212 in the group, the data is forwarded to the UE 212 through the PSA UPF 221.

When the transferring UE 211 and the receiving UE 213 are connected to different PSA UPFs 221 and 213, data may be transferred from the PSA UPF 221 in which the transferring UE 211 is positioned to the PSA UPF 222 in which the receiving UE 213 is positioned using the N19 interface for connection between the PSA UPFs 221 and 222. The SMF 201 may control the PSA UPFs 211 and 222 that perform an anchor function for the VN group.

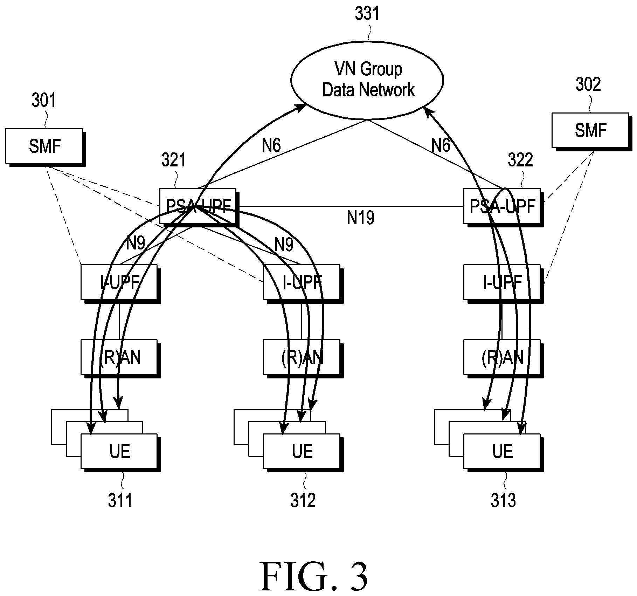

FIG. 3 is a view illustrating issues that may arise in VN group communication when a plurality of SMFs are used in a wireless communication system.

Referring to FIG. 3, the system of FIG. 3 includes UEs 311, 312, and 313, RANs for radio access of the UEs 311, 312, and 313, I-UPF, which is a UPF performing a relay function, PSA UPFs 321 and 322, which are UPFs performing an anchor function, and a data network 331 for VN group communication. For the basic operation of each NF in the system of FIG. 3, the description of the corresponding NF in FIG. 1 may be referred to, and thus a detailed description thereof is omitted.

In the 5G system, when a service area is limited for each SMF or an SMF is allocated for each tracking area (TA), a plurality of SMFs are required. In this case, since one SMF is limited to be in charge of group communication of one group in VN group communication, all PSA UPFs may not be controlled to support communication between all UEs in the same VN group. For example, as shown in FIG. 3, it may be impossible to establish a data transfer path between the PSA UPF 321 controlled by the SMF 301 allocated to a first TA (or a first service area) and the PSA UPF 322 controlled by the other SMF 302 allocated to a second TA (or a second service area) different from the first TA.

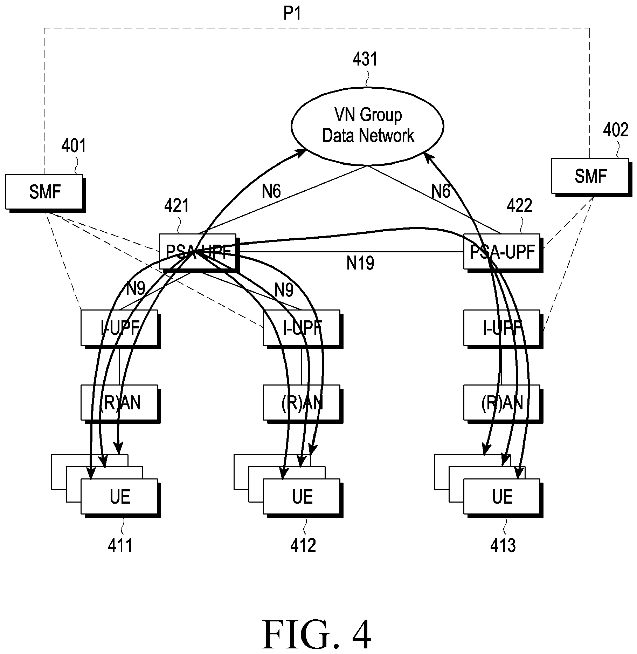

FIG. 4 is a view illustrating a VN group communication method when a plurality of SMFs are used in a wireless communication system according to an embodiment of the disclosure.

Referring to FIG. 4, a system of FIG. 4 includes UEs 411, 412, and 413, RANs for radio access of the UEs 411, 412, and 413, I-UPF which is a UPF performing a relay function, PSA UPFs 421 and 422 which are UPFs performing an anchor function, and a data network 431 for VN group communication. For the basic operation of each NF in the system of FIG. 4, the description of the corresponding NF in FIG. 1 may be referred to, and thus a detailed description thereof is omitted.

In the example of FIG. 4, the plurality of SMFs 401 and 402 may control all PSA UPFs 421 and 422 to support communication between all UEs 411, 412, and 413 in one VN group by sharing all information (or information necessary for at least group communication) in the VN group for group communication. For example, as shown in FIG. 4, through information sharing P1 between the SMFs 401 and 402, it is possible to establish a data transfer path between the PSA UPF 421 controlled by the SMF 401 allocated to the first TA (or the first service area) and the PSA UPF 422 controlled by the other SMF 402 allocated to the second TA (or the second service area) different from the first TA. Accordingly, according to the VN group communication method according to the disclosure, through information sharing between SMFs allocated to different TAs (or service areas), VN group communication may be supported even when the service area is limited for each SMF or the SMF is allocated for each TA in the 5G system. Hereinafter, in the description of the disclosure, group communication refers to VN group communication.

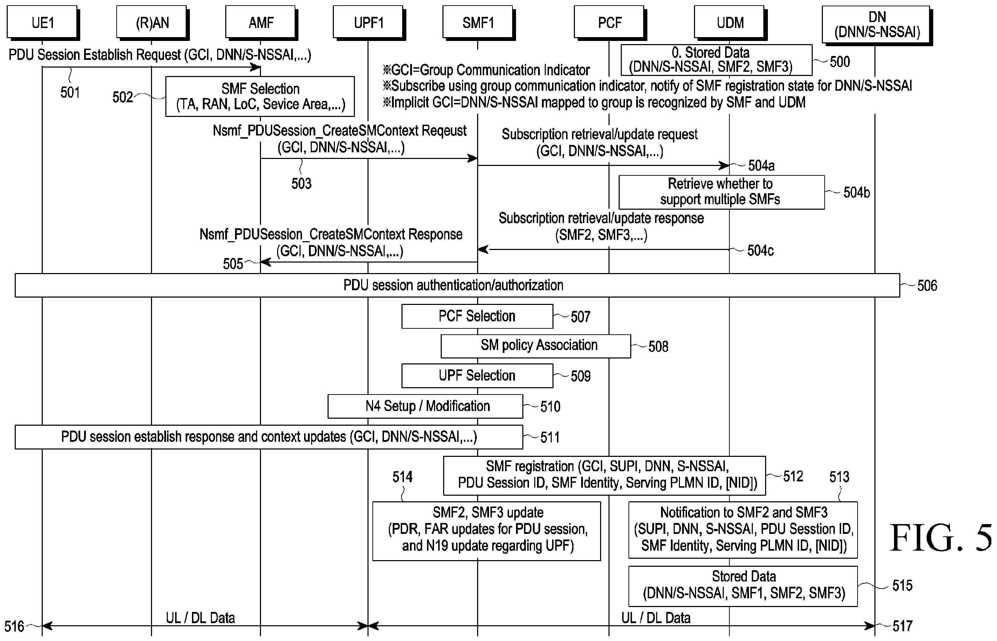

FIG. 5 is a flowchart illustrating a method for establishing a PDU session in a wireless communication system supporting VN group communication according to an embodiment of the disclosure.

FIG. 5 illustrates a PDU session establishment process using registration of an SMF and interworking between SMFs when a plurality of SMFs are used in a wireless communication system, and interworking between SMFs may be performed through information sharing between SMFs as in the example of FIG. 4. For the basic operation of each NF in the example of FIG. 5, the description of the corresponding NF in FIG. 1 may be referred to, and thus a detailed description thereof is omitted.

In the disclosure, a group communication indicator (GCI) is defined as an example of an indicator indicating VN group communication in the wireless communication system. The GCI may be used to indicate that the PDU session is for VN group communication. Further, in the disclosure, a DNN/S-NSSAI for VN group communication may be mapped/set/allocated to the GCI, and it may be identified that a PDU session related to the DNN/S-NSSAI is for VN group communication. As described above, in the disclosure, the SMF and/or the UDM may identify that the corresponding PDU session requested to be established is for group communication using the GCI or by identifying mapping between the GCI and the DNN/S-NSSAI.

Referring to FIG. 5, it is assumed that SMF2 and SMF3 participate in the VN group communication corresponding to the DNN/S-NSSAI mapped to the GCI in step 500, and this information related to the VN group communication is recorded in the UDM. SMF2 and SMF3 share SMContext, and user plane traffic is transferred between UPF2 and UPF3 through N19 connection. It is assumed that UPF2 is present in the service area (or TA) of SMF2 and UPF3 is present in the service area (or TA) of UPF3.

In step 501, for VN group communication, the UE1 sends a PDU session establish request to the AMF. The PDU session establish request may include a group communication indicator (GCI) as an indicator indicating VN group communication and a DNN/S-NSSAI mapped to the GCI. At least one of the DNN and the S-NSSAI may be included in the PDU session establish request.

In step 502, the AMF selects the SMF based on the PDU session establish request. In this case, the AMF may recognize the location on the RAN where UE1 is currently connected as a tracking area (TA) value and select a corresponding SMF, or may select the PSA UPF(s) connectable in the RAN where UE1 is connected with respect to the SMF included in the service area (or the corresponding location LoC). Further, the AMF may identify that the PDU session establish request received from UE1 is for group communication, and select the SMF for session establishment of UE1 from among the SMF(s) supporting group communication. The selection of the SMF supporting group communication may be performed using one or more combinations of the above-described various conditions. In the present embodiment, it is assumed that SMF1 is selected as an SMF supporting group communication.

In step 503, the AMF transfers the PDU session establish request received from UE1 to SMF1. The PDU session establish request transferred from the AMF to SMF1 may also include the GCI and a DNN/S-NSSAI mapped to the GCI.

In step 504a, SMF1 requests the UDM to subscribe to provide information related to SMFs supporting group communication (i.e., group communication supporting a plurality of SMFs) capable of sharing information between SMFs according to the disclosure and notify later. The request message transmitted to the UDM in step 504a may also include the GCI and a DNN/S-NSSAI mapped to the GCI. Although not shown in FIG. 5, SMF1 may perform a subscription procedure to UDM in advance to receive information about SMFs supporting group communication from UDM.

In step 504b, the UDM looks up subscription information related to group communication supporting a plurality of SMFs. In this case, the UDM may look up the subscription information related to the group communication based on at least one of the GCI and the DNN/S-NSSAI mapped to the GCI. If the group communication does not support the plurality of SMFs, the group communication for the corresponding DNN/S-NSSAI is supported only in the service area of the SMF.

In step 504c, in response to the request in step 504a, the UDM transfers subscription information including information about other SMFs participating in group communication supporting a plurality of SMFs, SMF2 and SMF3 in the embodiment of FIG. 5, to SMF1.

Upon receiving the subscription information related to the group communication supporting the plurality of SMFs from the UDM in step 505, SMF1 notifies the AMF that the SM context for the PDU session related to the group communication is created in response to the PDU session establish request in step 503. In this case, the response may include the GCI and a DNN/S-NSSAI mapped to the GCI.

If necessary in step 506, additional authentication/authorization for PDU session related to the group communication is performed.

In step 507, SMF1 selects a PCF for managing the operator policy by referring to the subscription information received from the UDM and the PDU session context so far.

In step 508, SMF1 performs session management (SM) policy association with the PCF.

In step 509, SMF1 selects the UPF. In this case, SMF1 may consider at least one condition, such as whether the UPF may support group communication, whether the corresponding UPF belongs to the service area that the SMF is in charge of, a current network load, or the like, when selecting the UPF. In the present embodiment, it is assumed that UPF1 supporting group communication is selected.

In step 510, SMF1 configures the UPF1 so that the PDU session with the corresponding UE1 may be connected to the RAN (N4 setup/modification). Thereafter, SMF1 may perform an additional SM policy update with the PCF.

In step 511, SMF1 transfers a PDU session establish response to UE1 through the AMF, and then updates the required UE context and SM context. The PDU session establish response may include the GCI and a DNN/S-NSSAI mapped to the GCI.

In step 512, SMF1 registers with UDM. Here, the message transmitted by SMF1 for registration to the UDM may include at least one of the GCI, the subscription permanent identifier (SUPI) which is the ID of UE1, the DNN/S-NSSAI, the PDU session ID, the SMF ID of SMF1, the PLMN ID and, in the case of the stand-alone non-public network (SNPN), the network ID (NID).

In step 513, the UDM identifies whether a list of SMFs participating in group communication related to the DNN/S-NSSAI mapped to the GCI is updated, and when the list is updated, notifies all SMFs included in the list of the updated SMF list. For example, when a new SMF (SMF1) participates in group communication, the existing SMFs (e.g., SMF2 and SMF3) are notified of the newly participated SMF (e.g., SMF1).

In step 514, the SMF (e.g., SMF1 in this embodiment) newly participating in the group communication and the existing SMFs (e.g., SMF2 and SMF3 in this embodiment) participating in the group communication may configure forwarding information changed by the newly added PDU session through information sharing between SMFs as shown in the example of FIG. 4 in respective PSA UPFs (updates SMF2 and SMF3).

In step 515, the UDM stores the updated list of the SMFs participating in group communication related to the DNN/S-NSSAI mapped to the GCI. For example, in this embodiment, the UDM may update the SMFs participating in group communication related to the DNN/S-NSSAI mapped to the GCI with, e.g., SMF1, SMF2, and SMF3, and store the same.

Thereafter, in steps 516 and 517, UE1 may perform group communication supporting a plurality of SMFs through the UPF1 to transmit and receive data to and from another UE (e.g., UE2 or UE3).

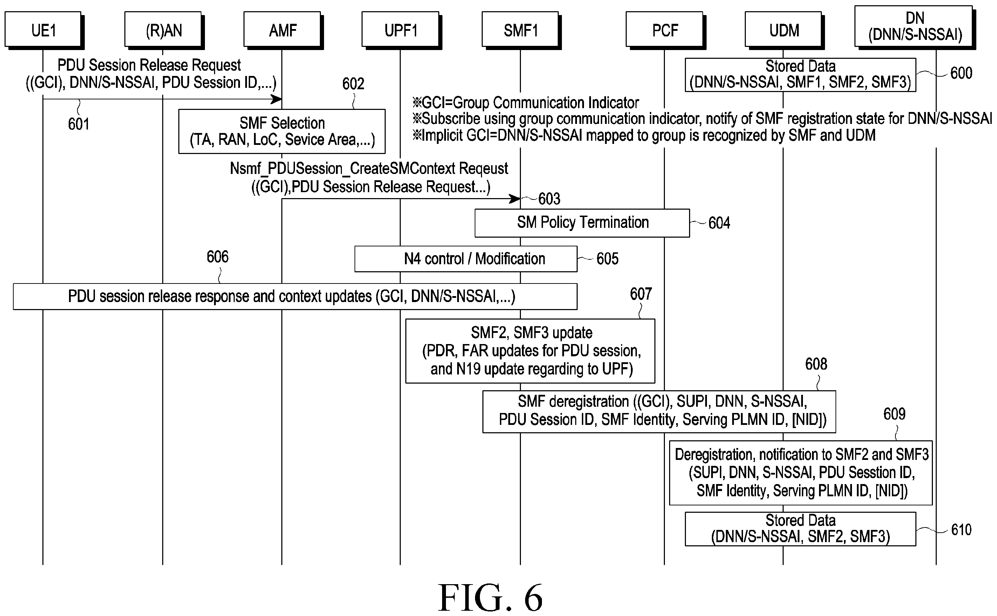

FIG. 6 is a flowchart illustrating a method for releasing a PDU session in a wireless communication system supporting VN group communication according to an embodiment of the disclosure.

The example of FIG. 6 illustrates a PDU session release process using deregistration of an SMF and interworking between SMFs when a plurality of SMFs are used, and interworking between SMFs may be performed through information sharing between SMFs as in the example of FIG. 4. For the basic operation of each NF in the example of FIG. 6, the description of the corresponding NF in FIG. 1 may be referred to, and thus a detailed description thereof is omitted.

The example of FIG. 6 may also indicate that the PDU session is for VN group communication using the GCI. In other words, a DNN/S-NSSAI for VN group communication may be mapped/set/allocated to the GCI, and it may be identified that a PDU session related to the corresponding DNN/S-NSSAI is for VN group communication. Further, the SMF and/or the UDM may identify that the corresponding PDU session requested to be established is for group communication using the GCI or by identifying mapping between the GCI and the DNN/S-NSSAI. Referring to FIG. 6, in step 600, it is assumed that SMF1, SMF2, and SMF3 are participating in the VN group communication corresponding to the DNN/S-NSSAI mapped to the GCI, and this information related to the VN group communication is recorded in the UDM. SMF1, SMF2, and SMF3 share SMContext, and user plane traffic is transferred through N19 connection between UPF1, UPF2, and UPF3. It is assumed that the PSA UPF of UE1 is UPF1, UPF1 is present in the service area (or TA) of SMF1, UPF2 is present in the service area (or TA) of SMF2, and UPF3 is present in the service area (or TA) of UPF3.

In step 601, UE1 sends a PDU session release request to the AMF. The PDU session release request may include a GCI as an indicator indicating VN group communication, a DNN/S-NSSAI mapped to the GCI, and a PDU session ID. In the PDU session release procedure of FIG. 6, since the GCI corresponding to the DNN/S-NSSAI is already known in the network in the PDU session establishment process, the GCI may not be included in the PDU session release request. In FIG. 6, the GCI enclosed in parentheses (i.e., "(GCI)") means that the GCI may be omitted from the corresponding message. Meanwhile, in FIG. 6, a UE initiated PDU session release procedure has been described as an example, but the operations of the disclosure may also be applied to the network initiated PDU session release procedure.

In step 602, the AMF selects an SMF based on the PDU session release request. In this case, the AMF may select the SMF using the existing PDU session ID. If this method is impossible, the AMF may select the corresponding SMF by recognizing the location on the RAN where UE1 is currently connected as the TA value, or may select the PSA UPF(s) connectable in the RAN where UE1 is connected, with respect to the SMF included in the service area. Further, the AMF may identify that the PDU session release request received from UE1 is for group communication, and select the SMF for session release of UE1 from among the SMF(s) supporting group communication. The selection of the SMF supporting group communication may be performed using one or more combinations of the above-described various conditions. In the present embodiment, it is assumed that SMF1 is selected as the SMF supporting group communication.

In step 603, the AMF transfers the PDU session release request received from UE1 to the SMF1. The PDU session release request transferred from the AMF to SMF1 may also include the GCI and a DNN/S-NSSAI mapped to the GCI.

In step 604, SMF1 performs a policy association termination process with the PCF.

In step 605, SMF1 performs N4 control with UPF1 to release the user plane path.

In step 606, SMF1 transfers a PDU session release response to UE1 through the AMF, and updates the SM context and the UE context according to the PDU session release. In this case, the PDU session release response may include the GCI and a DNN/S-NSSAI mapped to the GCI.

In step 607, SMF1 executes necessary updates, such as of a packet detection rule (PDR) or a forwarding action rule (FAR), to SMF2 and SMF3, which are SMFs in charge of group communication related to the corresponding PDU session, as the corresponding PDU session is released. In this case, the N19 connection, which is the connection between the UPFs, may also be updated.

In step 608, SMF1 informs the UDM that the PDU session for UE1 is released. In this case, the message for deregistration transferred by SMF1 to the UDM may include the GCI and the SMF ID of SMF1, and may additionally include at least one of the PDU session ID and the SUPI which is the ID of UE1, the DNN/S-NSSAI, the serving PLMN ID, and the NID.

In step 609, the UDM updates the subscription information related to the corresponding PDU session. In the case of a PDU session related to group communication, when the PDU session related to group communication no longer exists in the corresponding SMF (SMF1), the UDM notifies other SMFs of the corresponding group communication. For example, in this embodiment, when the PDU session for group communication of this DNN/S-NSSAI is no longer present in SMF1, SMF2 and SMF3 are notified that SMF1 is no longer included in the list of SMFs supporting the corresponding group communication.

In step 610, the UDM stores the updated list of the SMFs participating in group communication related to the DNN/S-NSSAI mapped to the GCI. For example, in this embodiment, the UDM updates and stores the SMFs participating in the group communication related to the DNN/S-NSSAI mapped to the GCI, as e.g., SMF2 and SMF3.

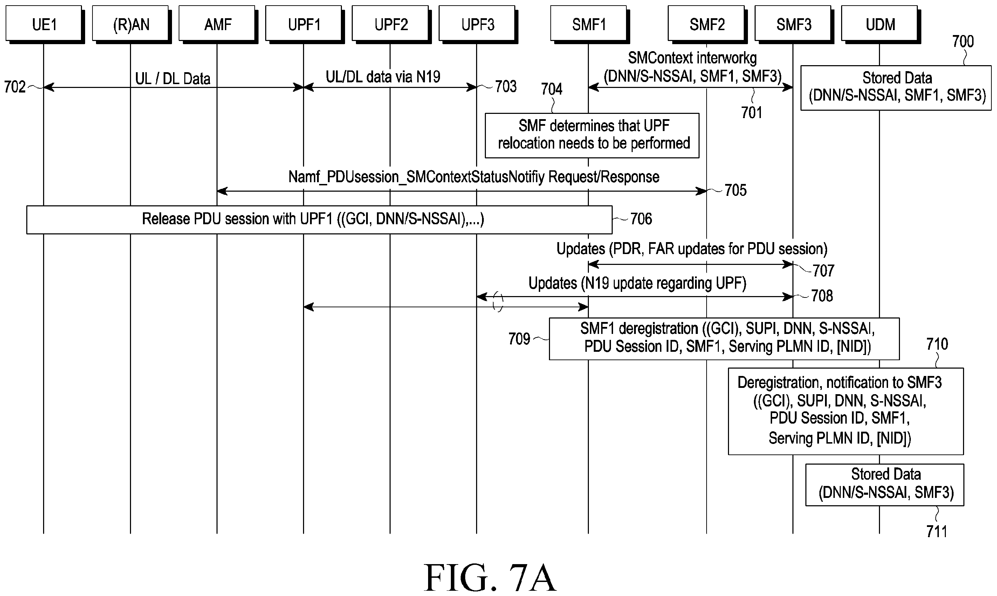

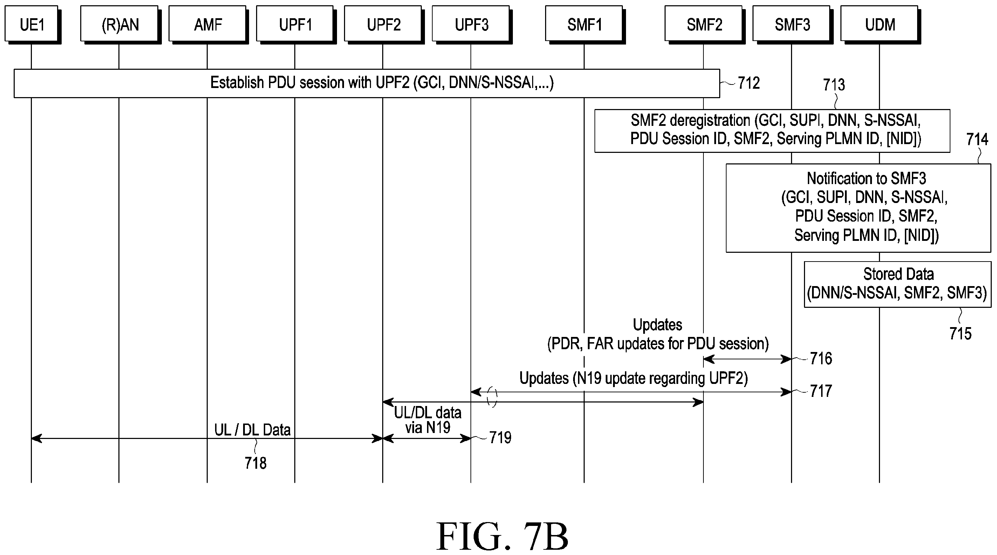

FIGS. 7A and 7B are flowcharts illustrating a method for changing a UPF in a wireless communication system supporting VN group communication according to an embodiment of the disclosure.

The example of FIGS. 7A and 7B illustrates a procedure in which a PDU session of UE1 through UPF1 is released in group communication due to, e.g., a movement of UE1 or a network load, and a PDU session of UE1 through UPF2 is established, and the group communication may be performed through information sharing between related SMFs. Further, the example of FIG. 7 may be performed in a form in which the PDU session establishment procedure in the example of FIG. 5 and the PDU session release procedure in the example of FIG. 6 are combined.

The session service continuity (SSC) mode is a mode for ensuring continuity (i.e., uninterrupted service) of a session and a service, and in the 5G system, one of SSC modes 1, 2, and 3 may be set for the PDU session. For example, in SSC mode 1, a UPF (i.e., a PSA UPF) serving as an anchor of the PDU session is maintained until the UE releases the PDU session. In SSC mode 2, when the existing PDU session for the UE is released and a new PDU session is established in the 5G system, the UPF acting as an anchor in the previous PDU session may be changed from the new PDU session to another UPF. In SSC mode 3, the PDU session may be applied only to the IP type, and when the UPF serving as an anchor is changed to a new UPF, a connection to the new UPF is established before the connection to the previous UPF is released. The example of FIG. 7 illustrates a PSA UPF change process using a deregistration/registration procedure of an SMF in SSC mode 2 when a plurality of SMFs are used.

Interworking between SMFs may be performed through information sharing between SMFs as shown in FIG. 4. For the basic operation of each NF in the example of FIGS. 7A and 7B, the description of the corresponding NF in FIG. 1 may be referred to, and thus a detailed description thereof is omitted.

The example of FIGS. 7A and 7B may also indicate that the PDU session is for VN group communication using the GCI described above. In other words, a DNN/S-NSSAI for VN group communication may be mapped/set/allocated to the GCI, and it may be identified that a PDU session related to the corresponding DNN/S-NSSAI is for VN group communication. Further, the SMF and/or the UDM may identify that the corresponding PDU session requested to be established is for group communication using the GCI or by identifying mapping between the GCI and the DNN/S-NSSAI.

Referring to FIG. 7A, in step 700, it is assumed that SMF1 and SMF3 are participating in the VN group communication corresponding to the DNN/S-NSSAI mapped to the GCI, and this information related to the VN group communication is recorded in the UDM.

In step 701, SMF1 and SMF3 may share SMContext through information sharing between SMFs as illustrated in FIG. 4.

In steps 702 and 703, user plane traffic is transferred between UPF1 and UPF3 through an N19 connection. It is assumed that the PSA UPF of UE1 is UPF1, UPF1 is present in the service area (or TA) of SMF1, UPF2 is present in the service area (or TA) of SMF2, and UPF3 is present in the service area (or TA) of UPF3, in the present embodiment.

In step 704, SMF1 determines that UPF relocation is required. The UPF relocation may be for movement of the UE or load balancing between SMFs.

In step 705, the SMF notifies the AMF that the UPF relocation determined in step 704 is required. In this case, transmission and reception of a request/response message related to UPF relocation notification may be performed between the SMF and the AMF.

In step 706, UE1 releases the PDU session with UPF1. To that end, UE1 transfers a PDU session release request to the AMF, and the AMF transfers the received PDU session release request to SMF1. The PDU session release request may include a GCI as an indicator indicating VN group communication, a DNN/S-NSSAI mapped to the GCI, and a PDU session ID. Further, the operations of the disclosure may be applied to UE initiated PDU session release as well as network initiated PDU session release. In step 707, SMF1 updates necessary information such as PDR/FAR update required according to PDU session release in step 706 with SMF3.

In step 708, SMF1 and SMF3 update the N19 connection related to UPF1 where UE1 has been connected according to the PDU session release for UPF1. For example, in the present embodiment, SMF1 and SMF3 control UPF1 and UPF3, respectively, to update the N19 connection between UPF1 and UPF3.

In step 709, SMF1 updates to the UDM that the PDU session for UE1 connected to the UPF1 and SMF1 is released. In this case, the message for deregistration transferred by SMF1 to the UDM may include the GCI and the SMF ID of SMF1, and may additionally include at least one of the SUPI which is the ID of the UE, the DNN/S-NSSAI, the PDU session ID, the PLMN ID and, in the case of the SNPN, the network ID (NID).

In step 710, the UDM notifies SMF3 for the corresponding group communication that the SMF for the VN group communication related to the DNN/S-NSSAI is reduced from SMF1 and SMF3 to only SMF3. For example, in the present embodiment, the UDM notifies SMF3 that SMF1 is excluded from the SMFs for group communication related to DNN/S-NSSAI.

In step 711, the UDM stores updated information related to group communication. In other words, the UDM stores an updated list of SMFs participating in group communication, so that the SMF for group communication related to the DNN/S-NSSAI mapped to the GCI is SMF3.

Referring to FIG. 7B, in step 712, UE1 performs a PDU session establishment procedure connected to UPF2. In this case, SMF2 is responsible for establishing a PDU session in which UE1 and the UPF2 are connected. To that end, UE1 transmits a PDU session establish request to the AMF, and the AMF transfers the received PDU session release request to SMF2. The PDU session establish request may include a GCI as an indicator indicating VN group communication, a DNN/S-NSSAI mapped to the GCI, and a PDU session ID.

In step 713, SMF2 registers PDU session information newly registered for UE1 in the UDM. SMF2 may request the UDM to provide subscription information related to SMFs supporting group communication (i.e., group communication supporting a plurality of SMFs) capable of sharing information between the SMFs. SMF2 may be aware that the existing SMF participating in the group communication corresponding to the DNN/S-NSSAI through the UDM is SMF3. The registration request message transmitted from SMF2 to the UDM in step 713 may include the GCI and the DNN/S-NSSAI mapped to the GCI, and may additionally include at least one of the SUPI which is the ID of UE1, the DNN/S-NSSAI, the PDU session ID, the SMF ID of SMF2, the PLMN ID and, in the case of the SNPN, the network ID (NID).

In step 714, the UDM may determine whether the list of SMFs participating in the group communication related to the DNN/S-NSSAI is updated, and when the list is updated, the UDM may notify all SMFs in the SMF list of participation of SMF2 in the group communication. For example, in this embodiment, when SMF2 newly participates in group communication, the UDM may notify SMF3, which is the existing SMF, of newly participating SMF2.

In step 715, the UDM stores an updated list of SMFs participating in group communication related to DNN/S-NSSAI. For example, in this embodiment, the UDM may update the SMFs participating in group communication related to the DNN/S-NSSAI as SMF2 and SMF3, and store the same.

In step 716, SMFs participating in the group communication related to the DNN/S-NSSAI may update information related to the added PDU session, such as the PDR/FAR, through information sharing between SMFs as illustrated in FIG. 4. For example, in the present embodiment, information for a PDU session of UE1 connected to the newly added UPF2 between SMF2 and SMF3 is updated.

In step 717, SMF2 and SMF3 update the N19 connection related to UPF2 where UE1 is connected. For example, in the present embodiment, SMF2 and SMF3 control UPF2 and UPF3, respectively, to update the N19 connection between UPF2 and UPF3.

Thereafter, UE1 may be connected to the UPF2 for group communication related to the DNN/S-NSSAI, and data of UE1 may be transmitted and received between UPF2 and UPF3 through the N19 connection in steps 719 and 720. UE1 may transmit and receive data to and from another UE by performing group communication supporting a plurality of SMFs through UPF2.

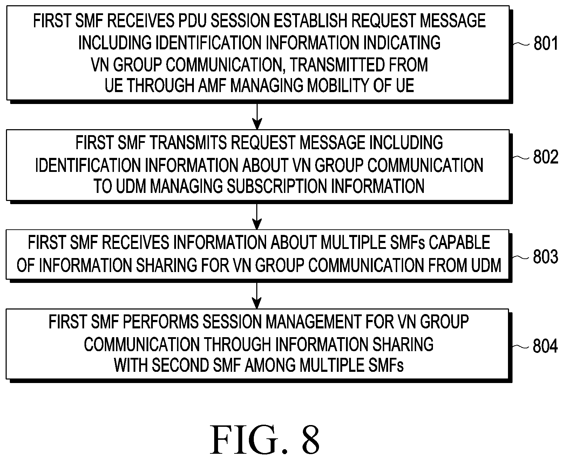

FIG. 8 is a flowchart illustrating operations of an SMF in a wireless communication system supporting VN group communication according to an embodiment of the disclosure.

In step 801, the SMF receives a PDU session establish request message including identification information indicating VN group communication, transmitted from the UE through the AMF for managing mobility of the UE.

In step 802, the SMF transmits a request message including identification information about the VN group communication to the UDM that manages the subscription information.

In step 803, the SMF receives information about a plurality of SMFs capable of sharing information for VN group communication from the UDM.

In step 804, the SMF performs session management for virtual group communication through information sharing with the second SMF among the plurality of SMFs.

The PDU session establish request message may include at least one of the DNN or the S-NSSAI mapped to the identification information and the identification information.

The first SMF and the second SMF may be allocated to different service areas or different TAs in the virtual group communication.

Further, the first SMF may control the first UPF performing an anchor function based on information sharing, to establish a data transfer path between the first UPF and the second UPF controlled by the second SMF.

In the present embodiment, the virtual group communication may be performed between the UE connected to the first UPF and the counterpart UE connected to the second UPF.

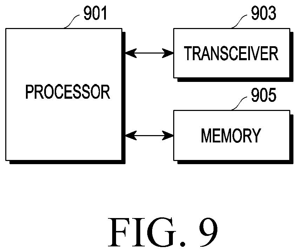

FIG. 9 is a view illustrating an example of a configuration of a network entity according to an embodiment of the disclosure.

The network entity of FIG. 9 may be one of the UE, RAN (base station), or the network functions (NFs), such as the AMF, UPF, SMF, PCF, and UDM, described above in connection with FIGS. 1 to 8.

According to an embodiment of the disclosure, the network entity may include a processor 901 controlling the overall operation of the network entity, a transceiver 903 including a transmitter and a receiver, and memory 905. Without limited thereto, the network entity may include more or less components than those shown in FIG. 9.

According to an embodiment of the disclosure, the transceiver 903 may transmit/receive signals to/from at least one of other network entities or a UE. The transmitted/received signals may include at least one of control information and data.

According to an embodiment of the disclosure, the processor 901 may control the overall operation of the network entity to perform operations according to a combination of one or more of the embodiments of FIGS. 1 to 8 described above. The processor 901, the transceiver 903, and the memory 905 are not necessarily implemented in separate modules but rather as one component, such as a single chip. The processor 901 may be an application processor (AP), a communication processor (CP), a circuit, an application-specific circuit, or at least one processor. The transceiver 903 may include at least one communication interface for wiredly/wirelessly transmitting/receiving signals to/from another network entity.

According to an embodiment of the disclosure, the memory 905 may store a default program for operating the network entity, application programs, and data, such as configuration information. The memory 905 provides the stored data according to a request of the processor 901. The memory 605 may include a storage medium, such as ROM, RAM, hard disk, CD-ROM, and DVD, or a combination of storage media. There may be provided a plurality of memories 905. The processor 901 may perform at least one of the above-described embodiments based on a program for performing operations according to at least one of the above-described embodiments stored in the memory 905.

The methods according to the embodiments described in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WLAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method performed by a first session management function (SMF) managing a session of a user equipment (UE) in a wireless communication system supporting virtual network (VN) group communication, the method comprising:
receiving a protocol data unit (PDU) session establish request message including identification information indicating the VN group communication, transmitted from the UE through an access and mobility management function (AMF) managing mobility of the UE;
transmitting a request message including the identification information to a user data management (UDM) managing subscription information;
receiving information about a plurality of SMFs capable of information sharing for the VN group communication from the UDM; and
performing session management for the VN group communication through the information sharing with a second SMF among the plurality of SMFs.

2. The method of claim 1, wherein the PDU session establish request message includes at least one of a data network name (DNN) or single-network slice selection assistance information (S-NSSAI) mapped to the identification information, and the identification information.

3. The method of claim 1, wherein the first SMF and the second SMF are allocated to different service areas or different tracking areas (TAs) in the VN group communication.

4. The method of claim 1, wherein the first SMF controls a first user plane function (UPF) performing an anchor function, based on the information sharing, to establish a data transfer path between a second UPF controlled by the second SMF and the first UPF.

5. The method of claim 4, wherein the VN group communication is performed between the UE connected to the first UPF and a counterpart UE connected to the second UPF.

6. A first session management function (SMF) managing a session of a UE in a wireless communication system supporting virtual network (VN) group communication, comprising:
a transceiver; and
a processor configured to:
receive, through the transceiver, a protocol data unit (PDU) session establish request message including identification information indicating the VN group communication, transmitted from the UE through an access and mobility management function (AMF) for managing mobility of the UE,
transmit, through the transceiver, a request message including the identification information to a user data management (UDM) managing subscription information;
receive, through the transceiver, information about a plurality of SMFs capable of information sharing for the VN group communication from the UDM; and
perform session management for the VN group communication through the information sharing with a second SMF among the plurality of SMFs.

7. The first SMF of claim 6, wherein the PDU session establish request message includes at least one of a data network name (DNN) or single-network slice selection assistance information (S-NSSAI) mapped to the identification information, and the identification information.

8. The first SMF of claim 6, wherein the first SMF and the second SMF are allocated to different service areas or different tracking areas (TAs) in the VN group communication.

9. The first SMF of claim 6, wherein the first SMF controls a first user plane function (UPF) performing an anchor function, based on the information sharing, to establish a data transfer path between a second UPF controlled by the second SMF and the first UPF.

10. The first SMF of claim 9, wherein the VN group communication is performed between the UE connected to the first UPF and a counterpart UE connected to the second UPF.

11. A user data management (UDM) managing subscription information about a UE in a wireless communication system supporting virtual network (VN) group communication, comprising:
a transceiver; and
a processor configured to:
receive, through the transceiver, a subscription request message including identification information indicating the VN group communication, from a first session management function (SMF), managing a session of the UE, receiving a protocol data unit (PDU) session establish request message including the identification information; and
in response to the subscription request message, transmit, through the transceiver, a subscription response message including information about a plurality of SMFs capable of information sharing for the VN group communication to the first SMF.

12. The UDM of claim 11, wherein the PDU session establish request message includes at least one of a data network name (DNN) or single-network slice selection assistance information (S-NSSAI) mapped to the identification information, and the identification information.

13. The UDM of claim 11, wherein the session management for the VN group communication is performed through the information sharing between the first SMF and a second SMF among the plurality of SMFs.

14. The UDM of claim 11, wherein the first SMF and the second SMF are allocated to different service areas or different tracking areas (TAs) in the VN group communication.

15. The UDM of claim 11, wherein the processor is further configured to, in case that a list of SMFs participating in the VN group communication related to the identification information is updated, notify existing SMFs in the list of information about an SMF newly included in the updated list.
